(19) Europäisches Patentamt
European Patent Office
Office européen des brevets

(11) **EP 4 564 226 A1**

(12) **EUROPEAN PATENT APPLICATION**

(43) Date of publication:
**04.06.2025 Bulletin 2025/23**

(21) Application number: **24216445.7**

(22) Date of filing: **29.11.2024**

(51) International Patent Classification (IPC):
**G06N 3/045** (2023.01)    **G06N 3/0464** (2023.01)
**G06N 3/0475** (2023.01)

(52) Cooperative Patent Classification (CPC):
**G06N 3/0475; G06N 3/045; G06N 3/0464**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.12.2023 US 202363605437 P**

(71) Applicant: **Google LLC
Mountain View, CA 94043 (US)**

(72) Inventors:
• **USMAN, Ben
Mountain View, 94043 (US)**
• **SUD, Avneesh
Mountain View, 94043 (US)**
• **LEUNG, King Hong Thomas
Mountain View, 94043 (US)**
• **CAZENAVETTE, George
Mountain View, 94043 (US)**

(74) Representative: **Varley, James Richard
Venner Shipley LLP
200 Aldersgate
London EC1A 4HD (GB)**

(54) **SYNTHETIC IMAGE DETECTION USING DIFFUSION MODELS**

(57)    Methods, systems, and apparatus, including computer programs encoded on computer storage media, for detecting synthetic images using a diffusion model.

FIG. 2B

EP 4 564 226 A1

**Description**

BACKGROUND

This specification relates to processing images using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

SUMMARY

This specification describes a system implemented as one or more computer programs on one or more computers that detects, using a diffusion model, whether an input image is a synthetic image.

Particular embodiments of the subject matter described in this specification can be implemented so as to realize one or more of the following advantages.

Detecting whether a given image has been synthetically generated, e.g., generated by a generative neural network or other generative model, or is a real image captured by a camera sensor is an important task for many real-world applications.

However, the task is difficult for many reasons.

For example, there are many different image generation models that could potentially have been used to generate a synthetic image and each of these models can potentially generate images with different characteristics that distinguish generated images from real-world images. This makes it difficult to develop a detector that can accurately detect synthetic images generated from multiple different image generation models.

Additionally, new image generation models are frequently being developed and released. This makes it impractical to re-train the detector each time a new source of potential synthetic images becomes available. As a result, existing detectors frequently become obsolete once new versions of image generation models are developed and released.

This specification addresses these issues by using a diffusion neural network to augment an input to a detector neural network, i.e., instead of only providing the detector neural network access to a given query image.

By giving the detector neural network access to a reconstruction of the image generated by the diffusion neural network and, optionally, a noise map generated by the diffusion neural network as part of generating the reconstruction, the detector neural network can generalize better to images from unseen generative models, i.e., generative models that were not used to generate any of the images in the training data for the detector neural network, relative to only giving the detector neural network access to the input image.

In particular, as a result of being provided access to the reconstruction and, optionally, the noise map, the detector neural network can accurately detect synthetic images that were generated by a wide variety of generative models, including those that were developed after the generator neural network was trained.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example synthetic image detection system.
FIG. 2A is a flow diagram of an example process for detecting whether an input image is synthetic.
FIG. 2B is a flow diagram of an example process for performing a forward diffusion process.
FIG. 2C is a flow diagram of an example process for performing a reverse diffusion process.
FIG. 3 is an example of the operation of the system.

Like reference numbers and designations in the various drawings indicate like elements.

DETAILED DESCRIPTION

This specification describes a system implemented as computer programs on one or more computers in one or more locations that detects whether a given input image is a synthetic image.

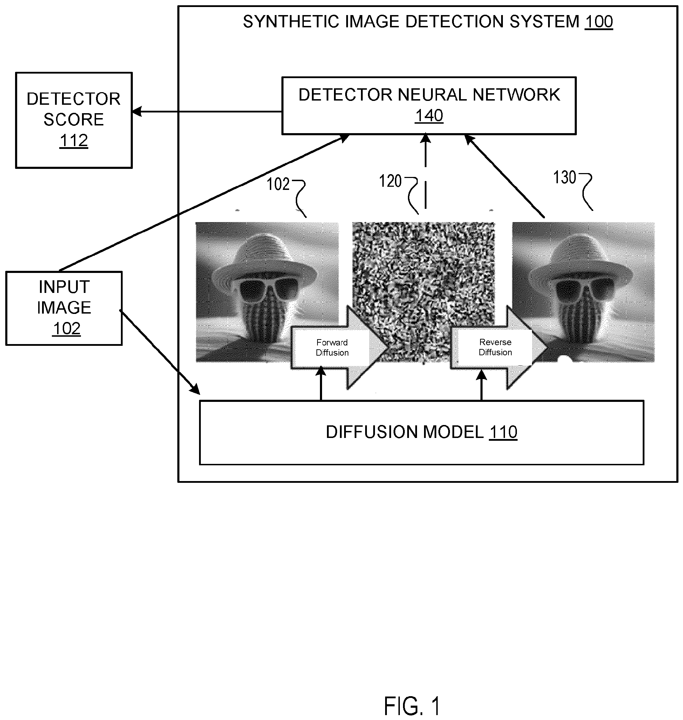

FIG. 1 is a diagram of an example synthetic image detection system 100. The synthetic image detection system 100 is an example of a system implemented as computer programs on one or more computers in one or more locations, in which the systems, components, and techniques described below can be implemented.

The system 100 is a system that detects, using a diffusion model 110, whether an input image 102 is a synthetic image.

A synthetic image is an image that is generated by a generative model, e.g., a trained image generation neural network. Examples of such generative models include diffusion models, e.g., latent diffusion models or hierarchical diffusion models, auto-regressive image generation models, generative adversarial networks (GANs), and so on.

A "real" image, on the other hand, is an image that is captured by a camera sensor.

Thus, the system detects whether the input image 102 is a synthetic image generated by a generative model instead of a real image captured by a sensor.

In particular, the system 100 generates a detector score 112 that represents a likelihood that the input image 102 is a synthetic image that has been generated by a generative model, e.g., and not a real image captured by a camera sensor.

Optionally, the system 100 can then generate a determination that the input image is synthetic, e.g., if the detector score exceeds a threshold value, or that the input image is real, e.g., if the detector score does not exceed the threshold value.

The system 100 can use then use this determination for any of a variety of purposes. For example, the system 100 can analyze images being uploaded or otherwise added to a particular data source or software application that requires only "real" images. In this case, in response to determining that a given image is synthetic, the system can block the image from being added to the data source or software application. As another example, in response to determining that a given image is synthetic, the system 100 can associate the given image with a label or other annotation that identifies that the given image is likely to be synthetically-generated. This annotation can then subsequently be shown to users along with the given image.

More specifically, the system 100 obtains an input image 102.

The system generates, using a diffusion model 110 and from the input image, a representation of a noise map 120.

The noise map 120 is a tensor that has the same dimensionality as the input image 102 but that has noisy values for the pixels of the input image 102, i.e., instead of the color values in the input image.

The values are referred to as "noisy" because they appear to be values sampled from a distribution, e.g., Gaussian distribution or another appropriate distribution, rather than semantically coherent pixel values. The sampled values can also be referred to as "noise."

More specifically, the diffusion model 110 is a model that has been trained to generate input images, e.g., unconditionally or conditioned on a conditioning input, starting from a representation of a noise map that includes values that have been sampled from a noise distribution, e.g., a Gaussian distribution or another appropriate distribution. That is, after training, the diffusion model 110 can be used to perform a backward diffusion process to gradually remove noise from the representation of the noise map to generate a new image.

During training, the diffusion model 110 can be trained to reconstruct representations of input images from noisy representations of the representations of the input images, where a noisy representation of the input image is generated by adding noise sampled from the noise distribution to the representation of the input image. The process of adding noise to an original image is referred to as a forward diffusion process.

In some implementations, the diffusion model 110 is a latent diffusion model that can be used to perform a forward or backward diffusion process in a latent space. In these implementations, the representation of the noise map 120 is a representation in a latent space, i.e., rather than in the pixel space of the input image 102.

In particular, images in the pixel space have values for each pixel that specify color values, e.g., RGB values or another color encoding scheme. The latent space is generally lower-dimensional than the pixel space. Representations in the latent space are latent images and the values for the pixels of the latent images are learned, latent values rather than color values.

For example, the system 100 can iteratively add noise to a latent representation of the input image 102 as part of generating the representation of the noise map 112 by performing a forward diffusion process using the latent diffusion model 110.

The system 100 then generates, using the diffusion model 110 and from the representation of the noise map 120, a reconstruction 130 of the input image 102.

For example, the system 100 can iteratively remove noise from the representation of the noise map 120 to generate a representation of the reconstruction 130 by performing a reverse diffusion process using the latent diffusion model 110.

The system 100 then processes a detector input that includes the input image 102 and the reconstruction 130 of the input image 102 using a detector neural network 140 to generate a detector score 112 that represents a likelihood that the input image 102 is a synthetic image that has been generated by a generative model. That is, rather than only providing the input image 102 as input to the detector neural network 140, the system 100 also provides, as part of the detector input, the reconstruction 130 of the input image 102. Optionally, the detector input can also include the noise map 120 that was generated from the input image.

As a particular example, the detector input can be a concatenation along the channel dimension of the input image 102, the reconstruction 130, and, optionally, the noise map 120.

The detector neural network 140 can generally have any appropriate architecture that allows the detector neural network 140 to map an input that includes the input image, the reconstruction, and, optionally, the noise map to a score.

For example, the detector neural network 140 can be a convolutional neural network. For example, the detector 140 can have a ResNet or a VCG architecture.

As another example, the detector neural network 140 can be a vision Transformer neural network.

As yet another example, the detector neural network 140 can include both convolutional and self-attention layers.

Prior to using the detector neural network 140 to detect synthetic images, the system 100 or another training system can train the detector neural network 140 on a set of training images that includes both real images and synthetic images.

The synthetic images in the set of training images can have been generated by one or more pre-trained generative neural networks. For example, the training system can use the one or more generative neural networks to generate the synthetic images or can access a data set of already-generated synthetic images.

Generally, the training system can train the detector neural network 140 on an appropriate objective, e.g., a binary cross entropy loss, that measures errors between detector scores generated by the detector neural network 140 for the training images and ground truth scores for the training images that indicate whether any given training image is a real image or a synthetic image.

The diffusion model 110 has been pre-trained prior to training the detector neural network 140. For example, the diffusion model 110 can have been trained, e.g., by the system 100 or by another system to generate images using a score matching objective or another appropriate diffusion model training objective. The system can then hold the diffusion model 110 fixed during the training of the detector neural network 140. That is, the system can keep the parameters of the diffusion model 110 fixed while using the diffusion model 110 to generate detector inputs that are processed by the detector neural network 140 during training.

Because the system 100 does not need to train the diffusion model 110 and needs access to only the reconstruction and the noise map generated the already-trained diffusion model 110, the system 100 can generally use any appropriate diffusion model as the diffusion model 110.

By giving the detector neural network 140 access to the reconstruction 130 and, optionally, the noise map 120, the detector neural network 140 can generalize better to images from unseen generative models, i.e., generative models that were not used to generate any of the images in the training data for the detector neural network 140, as opposed to only giving the detector neural network 140 access to the input image.

In particular, as a result of being provided access to the reconstruction, the detector neural network 140 can accurately detect synthetic images that were generated by a wide variety of generative models, including those that were developed after the generator neural network 140 was trained.

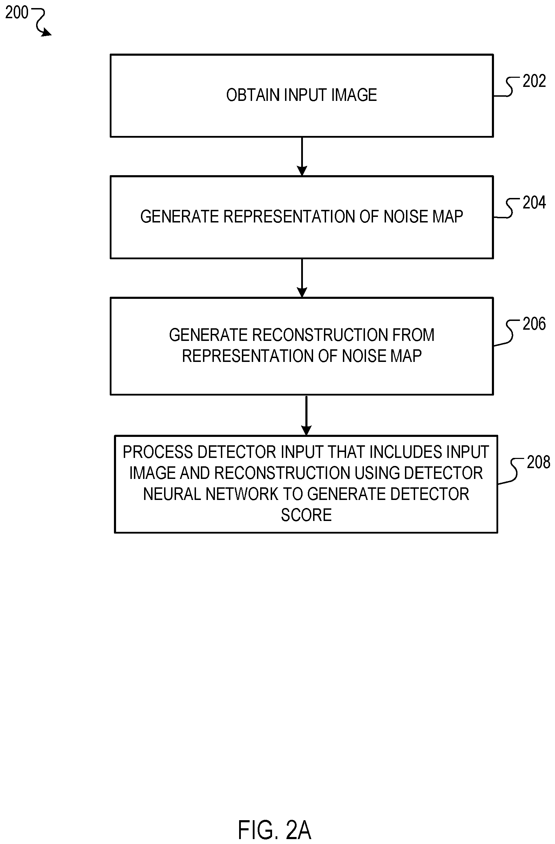

FIG. 2A is a flow diagram of an example process 200 for generating a detector score for an input. For convenience, the process 200 will be described as being performed by a system of one or more computers located in one or more locations. For example, a synthetic image detection system, e.g., the synthetic image detection system 100 depicted in FIG. 1, appropriately programmed in accordance with this specification, can perform the process 200.

The system obtains an input image (step 202).

The system generates, using a diffusion model and from the input image, a representation of a noise map (step 204).

Generally, the system generates the representation of the noise map by performing a forward diffusion process that iteratively adds noise to a representation of the input image. For example, the forward diffusion process can be an inverted Denoising diffusion implicit models (DDIM) sampling process that adds noise to the representation of the input image at each of multiple forward diffusion steps.

For example, the diffusion model can be a latent diffusion model that includes an image encoder configured to encode the input image in the pixel space into a latent representation of the image in a latent space, a latent denoising neural network that generates denoising outputs in the latent space, and an image decoder configured to decode the latent representation of the image from the latent space into the pixel space.

In this example, the system can process the input image using the image encoder to generate a latent representation of the image in the latent space and then perform a forward diffusion process starting from the latent representation and using the latent denoising neural network to generate the representation of the noise map in the latent space.

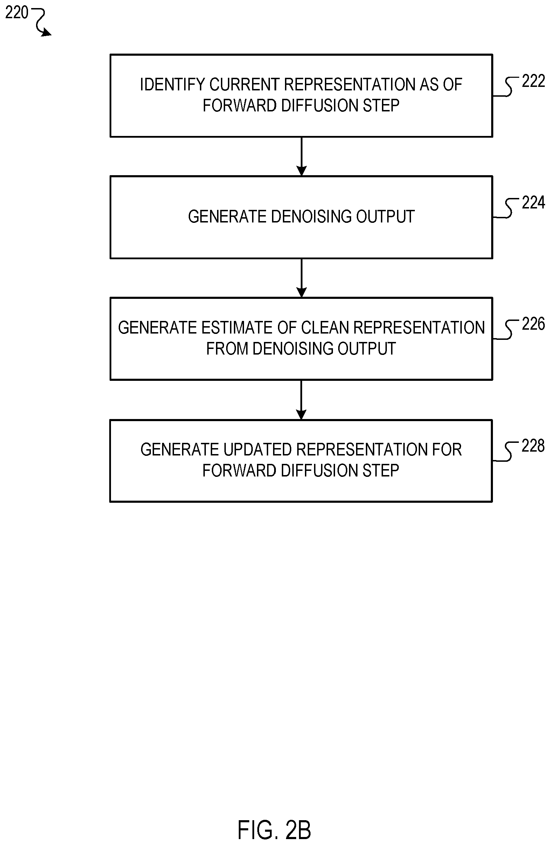

Performing a forward diffusion process to generate the representation of the noise map is described in more detail below with reference to FIG. 2B.

The system generates, using the diffusion model and from the representation of the noise map, a reconstruction of the input image (step 206).

Generally, the system generates the reconstruction of the input image by performing a reverse diffusion process that iteratively removes noise from the representation of the noise map. For example, the reverse diffusion process can be a DDIM sampling process that removes noise from the representation at each of multiple reverse diffusion steps.

For example, when the diffusion model is a latent diffusion model, the system can perform a reverse diffusion process starting from the representation of the noise map and using the latent denoising neural network to generate a representation in the latent space of the reconstruction of the input image. The system can then process the representation of the reconstruction of the input image using the image decoder to generate the reconstruction of the input image.

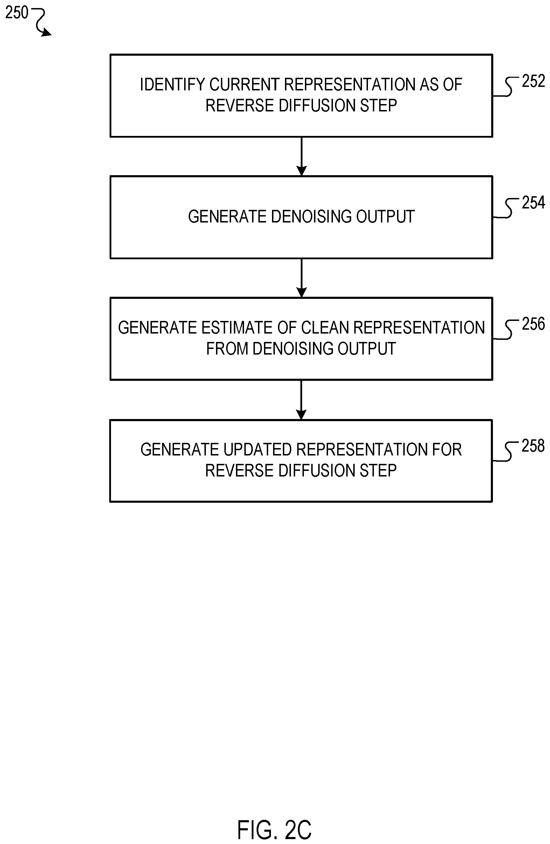

Performing the reverse diffusion process will be described in more detail below with reference to FIG. 2C.

The system processes a detector input that includes the input image and the reconstruction of the input image using a detector neural network to generate a detector score that represents a likelihood that the input image is a synthetic image that has been generated by a generative model (step 208).

In some cases, the detector input also includes the noise map in addition to the input image and the reconstruction of the input image. In these cases, when the diffusion model is a latent diffusion model, the system can process the representation of the noise map using the image decoder to generate the noise map to be included in the detector input.

As described above, the system can then optionally classify the input image as either synthetic or real using the detector score. For example, the system can generate a determination that the input image is synthetic, e.g., if the detector score exceeds a threshold value, or that the input image is real, e.g., if the detector score does not exceed the threshold value.

FIG. 2B is a flow diagram of an example process 220 for performing a forward diffusion process. For convenience, the process 220 will be described as being performed by a system of one or more computers located in one or more locations. For example, a synthetic image detection system, e.g., the synthetic image detection system 100 depicted in FIG. 1, appropriately programmed in accordance with this specification, can perform the process 220.

As described above, during the forward diffusion process, the system adds noise to a representation of the input image at each of multiple forward diffusion steps. In particular, the system can perform an iteration of the process 220 at each of the multiple forward diffusion steps.

Generally, each forward diffusion step corresponds to a time step $t$. For example, the time steps $t$ can increment from the first time step, $t = 1$, to the last time step, $t = T$, where time step $t = 0$ corresponds to the representation being the initial representation of the input image, e.g., the representation generated by processing the input image using the image encoder.

Each time step is also associated with a noise level $\overline{\alpha}_t$. For example, the noise level can be a function of the time step $t$, i.e., so that different time steps have different noise levels. Generally, higher time steps are associated with lower noise levels, i.e., the function is a decreasing function (within the domain $t$ to $T$). Examples of such functions include a linear function and a cosine function. In other words, as the forward diffusion steps progress, the noise level is adjusted according to a "schedule."

The system identifies a current representation $z_t$ of the input image as of the forward diffusion step $t+1$ (step 222). For the first forward diffusion step, the current representation, i.e., the representation at $t = 0$, is the latent representation of the input image generated by the image encoder. For each subsequent forward diffusion step, the current representation is the updated representation after the previous forward diffusion step.

The system processes an input that includes the current representation $z_t$ of the input image using the latent denoising neural network to generate a denoising output (step 224).

Generally, the input also includes a representation of the preceding time step $t$.

For example, the denoising output can be expressed as $\varepsilon_\theta (z_t, t)$, where $\theta$ represents the parameters of the latent denoising neural network.

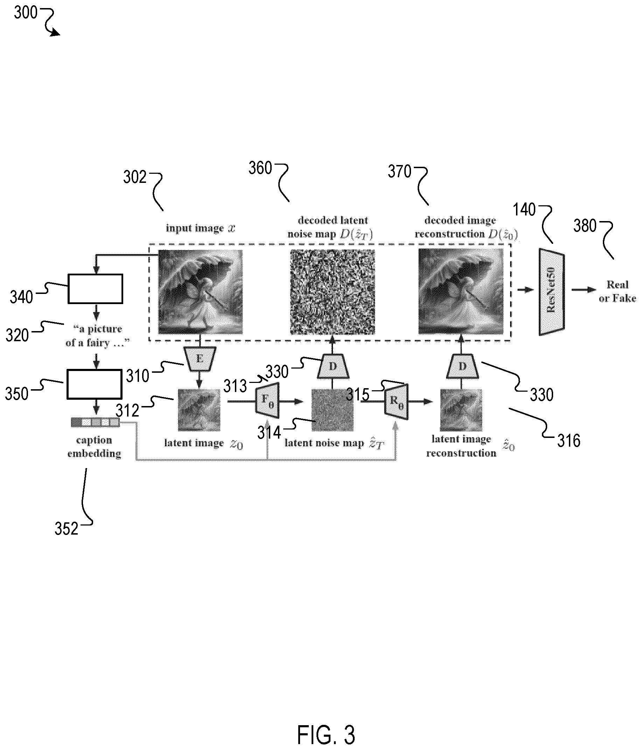

In some cases, the latent denoising neural network can be a text-conditioned latent denoising neural network. In these cases, the input can also include a representation of, e.g., one or more embeddings of, a text caption for the input image. Generating the text caption will be described in more detail below with reference to FIG. 3.

In this example, the denoising output can be expressed as $\varepsilon_\theta(z_t, t, c)$, where $c$ represents the representation of the text caption.

Because of the way that the diffusion model has been trained, the denoising output generally defines an estimate of the noise component of the current representation. For example, the denoising output can be the estimate of the noise component, an estimate of the true final representation of the image, or can be a v-parametrization output.

The system generates an estimate of the clean, i.e., initial, representation of the input image from the denoising output (step 226). That is, although the system has access to the initial representation, because the forward diffusion process adds noise, the system cannot exactly reconstruct the initial estimate using only the denoising output generated by the denoising neural network.

In particular, the system can generate the estimate $f_\theta(z_t, t, c)$ of the clean representation of the input image from the current representation $z_t$ in accordance with the noise level $\overline{\alpha}_t$ for the preceding time step.

For example, the estimate $f_\theta(z_t, t, c)$ can satisfy:

$$f_\theta(z_t, t, c) = \frac{z_t - \sqrt{1-\overline{\alpha}_t}\epsilon_\theta(z_t, t, c)}{\sqrt{\overline{\alpha}_t}}.$$

The system combines the estimate of the noise component and the estimate of the clean representation of the input image to generate an updated representation (step 228).

In particular, the system combines the estimate of the noise component and the estimate of the clean representation in accordance with the noise level for the time step. For example, the updated representation $z_{t+1}$ can satisfy:

$$z_{t+1} = \sqrt{\overline{\alpha}_{t+1}}f_\theta(z_t, t, c) + \sqrt{1 - \overline{\alpha}_{t+1}}\epsilon_\theta(z_t, t, c).$$

As a result, the representation $z_{t+1}$ has more noise than the representation $z_t$, i.e., the system adds noise to the representation as a result of performing the forward diffusion step. For example, because the noise level decreases as the time steps increment, the system adds more noise to an (already-noisy) estimate of the clean representation as the forward diffusion steps progress.

The system can continue performing iterations of the process 200 until the system performs the iteration corresponding to the time step $t = T$ and can then use the representation $z_T$ as the representation of the noise map.

FIG. 2C is a flow diagram of an example process 250 for performing a reverse diffusion process. For convenience, the process 250 will be described as being performed by a system of one or more computers located in one or more locations. For example, a synthetic image detection system, e.g., the synthetic image detection system 100 depicted in FIG. 1, appropriately programmed in accordance with this specification, can perform the process 250.

As described above, during the reverse diffusion process, the system removes noise from a representation of the input image at each of multiple reverse diffusion steps. In particular, the system can perform an iteration of the process 250 at each of the multiple reverse diffusion steps.

Generally, like the forward diffusion step, each reverse diffusion step corresponds to a time step $t$. For example, the time steps $t$ can decrement from the first time step, $t = T-1$, to the last time step, $t = 0$, where time step $t = T$ corresponds to the representation being the representation of the noise map generated by performing the forward diffusion process. Moreover, as described above, each time step is also associated with a noise level $\overline{\alpha}_t$.

The system identifies a current representation $\hat{z}_t$ of the input image as of the reverse diffusion step $t$-1 (step 252). For the first reverse diffusion step, the current representation is the latent representation of the noise map. For each subsequent reverse diffusion step, the current representation is the updated representation after the previous reverse diffusion step.

The system processes an input that includes the current representation $\hat{z}_t$ of the input image using the latent denoising neural network to generate a denoising output (step 254).

Generally, the input also includes a representation of the preceding time step $t$.

As described above, the latent denoising neural network can be a text-conditioned latent denoising neural network. In these cases, the input can also include a representation of, e.g., one or more embeddings of, a text caption for the input image.

Thus, in these cases, the denoising output can be represented as $\varepsilon_\theta(\hat{z}_t, t, c)$.

The system generates an estimate of the clean representation of the input image from the denoising output (step 256).

In particular, as described above, the system can generate the estimate $f_\theta(\hat{z}_t, t, c)$ of the clean representation of the input image from the current representation $\hat{z}_t$ in accordance with the noise level $\overline{\alpha}_t$ for the preceding time step.

For example, the estimate $f_\theta(\hat{z}_t, t, c)$ can satisfy:

$$f_\theta(\hat{z}_t, t, c) = \frac{\hat{z}_t - \sqrt{1-\overline{\alpha}_t}f_\theta(\hat{z}_t, t, c)}{\sqrt{\overline{\alpha}_t}}.$$

The system combines the estimate of the noise component and the estimate of the clean representation of the input image to generate an updated representation (step 258).

In particular, the system combines the estimate of the noise component and the estimate of the clean representation in accordance with the noise level for the time step. For example, the updated representation $z_{t-1}$ can satisfy:

$$\hat{z}_{t-1} = \sqrt{\bar{\alpha}_{t-1}} f_\theta(\hat{z}_t, t, c) + \sqrt{1 - \bar{\alpha}_{t-1}} \epsilon_\theta(\hat{z}_t, t, c).$$

As a result, the representation $z_{t-1}$ has less noise than the representation $z_t$, i.e., the system removes noise from the representation as a result of performing the forward diffusion step. For example, because the noise level increases as the time steps decrement, the system less noise to the estimate of the clean representation as the reverse diffusion steps progress.

The system can continue performing iterations of the process 250 until the system performs the iteration corresponding to the time step t= 0 and can then use the representation $\hat{z}_0$ as the representation of the reconstruction.

FIG. 3 shows an example 300 of the operation of the system.

In the example 300, the diffusion model is a latent diffusion model.

Thus, the diffusion model includes an image encoder 310 configured to encode the input image in the pixel space into a latent representation of the image in a latent space, a latent denoising neural network that generates denoising outputs in the latent space, and an image decoder 330 configured to decode the latent representation of the image from the latent space into the pixel space.

For example, the image encoder 310 and the image decoder 330 can have been jointly trained, e.g., as part of an auto-encoder framework, prior to the training of the latent denoising neural network and then held fixed during the training of the latent denoising neural network. The image encoder 310 and image decoder 330 can generally have any appropriate neural network architectures for mapping images to the latent space and mapping representations in the latent space to images, respectively. For example, the image encoder 310 and image decoder 330 can both be convolutional neural networks or can include both convolutional and self-attention layers.

Moreover, in the example 300, the latent denoising neural network 320 is a text-conditioned latent denoising neural network. That is, the neural network 320 generates denoising outputs conditioned on representations of text inputs.

Thus, as shown in the example 300, the system receives an input image x 302. The system then generates, from the input image 302, a text caption 320.

In particular, the system processes the input image 302 using an image captioning neural network 340 to generate the text caption 320. The image captioning neural network 340 can generally be any appropriate pre-trained image captioner that maps an input image to a text caption that describes the input image. For example, the image captioning neural network can include an image encoder neural network, e.g., a convolutional neural network or a vision Transformer, that generates an encoded representation of the input image and a text decoder neural network, e.g., an auto-regressive Transformer neural network, that processes an input that includes the encoded representation of the input image to generate the text caption.

The system then processes the text caption 320 using a text embedding neural network 350 to generate an embedding 352 of the text caption 320. The text embedding neural network 350 can generally be any appropriate pre-trained text embedder that maps an input text sequence to one or more embeddings that characterize the input text sequence. For example, the text embedding neural network can be an encoder-only Transformer neural network.

The system also processes the input image 302 using the image encoder 310 to generate a latent image 312.

The system then performs a forward diffusion process 313 using the latent denoising neural network to generate a latent representation 314 ("latent noise map") of a noise map 360.

The latent denoising neural network can generally have any appropriate architecture that maps an input that includes a representation of an image to a denoising output that has the same dimensionality as the representation of the image.

For example, latent denoising neural network can be a convolutional neural network, e.g., a U-Net or other architecture that maps one input of a given dimensionality to an output of the same dimensionality.

As another example, the latent denoising neural network can be a Transformer neural network that processes the diffusion input through a set of self-attention layers to generate the denoising output.

The latent denoising neural network can be conditioned on the text embeddings in any of a variety of ways.

As one example, the latent denoising neural network can include one or more cross-attention layers that each cross-attend into the one or more embeddings.

As another example, the latent denoising neural network can include one or more other types of neural network layers that are conditioned on the one or more embeddings. Examples of such layers include Feature-wise Linear Modulation (FiLM) layers, layers with conditional gated activation functions, and so on.

As described above, the input at any given step can also include data defining a noise level for the step. In these cases, data identifying the noise level, the time step, or both can be embedded using an appropriate neural network, e.g., a multi-layer perceptron (MLP) and used to condition the latent denoising neural network as described above for the text

7

input. For example, the latent denoising neural network can include one or more cross-attention layers that each cross-attend into the one or more embeddings of the text and the embedding of the time step or noise level or can include a first set of one or more cross-attention layers that each cross-attend into the one or more embeddings of the text and a second set of one or more cross-attention layers that each cross-attend into the embedding of the time step or noise level.

After generating the latent noise map 314, the system performs a reverse diffusion process 315 using the latent denoising neural network and starting from the latent noise map 314 to generate a latent image reconstruction 316, i.e., a latent representation of a reconstruction 370.

The system then generates a detector input for the detector neural network 140. In the example 300, the system processes both the latent noise map 314 and the latent image reconstruction 316 using the image decoder 330 to generate the noise map 316 and the reconstruction 370, respectively.

The system then processes a decoder input that includes the image 302, the noise map 316, and the reconstruction 370 using the decoder neural network 140 to generate a score 380 that indicates whether the image 302 is real or synthetic ("fake").

While this specification generally describes that the diffusion model is a latent diffusion model and that the "representations" of the noise map, reconstruction, and the image are latent representations, as indicated above, the diffusion model can instead perform diffusion in the pixel space. In this case, the representation of the noise map is the noise map itself, the representation of the reconstruction is the reconstruction itself, and the representation of the image is the image itself. As a result, in this case, no encoder or decoder are needed to encode or decode representations into or from the latent space, given that the forward and reverse diffusion processes occur in the pixel space.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

This specification also includes the following clauses:

Clause 1. A method performed by one or more computers, the method comprising: obtaining an input image; generating, using a diffusion model and from the input image, a representation of a noise map; generating, using the diffusion model and from the representation of the noise map, a reconstruction of the input image; and processing a detector input that comprises the input image and the reconstruction of the input image using a detector neural network to generate a detector score that represents a likelihood that the input image is a synthetic image that has been generated by a generative model.

Clause 2. The method of clause 1, wherein the detector input further comprises the noise map.

Clause 3. The method of clause 1 or clause 2, wherein the input image is an image in pixel space, and wherein the diffusion model is a latent diffusion model that comprises: an image encoder configured to encode the input image in the pixel space into a latent representation of the image in a latent space; a latent denoising neural network that generates denoising outputs in the latent space; and an image decoder configured to decode the latent representation of the image from the latent space into the pixel space.

Clause 4. The method of clause 3, wherein generating, using a diffusion model and from the input image, a representation of a noise map comprises: processing the input image using the image encoder to generate the latent representation of the image in the latent space; and performing a forward diffusion process starting from the latent representation and using the latent denoising neural network to generate the representation of the noise map, wherein the representation of the noise map is in the latent space.

Clause 5. The method of clause 4, when dependent on clause 2, further comprising: processing the representation of the noise map using the image decoder to generate the noise map.

Clause 6. The method of any one of clauses 3-5, wherein generating, using the diffusion model and from the representation of the noise map, the reconstruction of the input image comprises: performing a reverse diffusion process starting from the representation of the noise map and using the latent denoising neural network to generate a representation in the latent space of the reconstruction of the input image; and processing the representation of the reconstruction of the input image using the image decoder to generate the reconstruction of the input image.

Clause 7. The method of clause 6, wherein the reverse diffusion process is a DDIM sampling process, and optionally.

Clause 8. The method of clause 4, when dependent on clause 7, wherein the forward diffusion process is an inverted DDIM sampling process.

Clause 9. The method of any one of clauses 3-8, wherein the latent denoising neural network is a text-conditional latent denoising neural network, and wherein the method further comprises generating, from the input image, a text caption.

Clause 10. The method of clause 9, when dependent on clause 6, wherein performing a reverse diffusion process starting from the representation of the noise map and using the latent denoising neural network to generate a representation in the latent space of the reconstruction of the input image comprises: performing a reverse diffusion process starting from the representation of the noise map and using the latent denoising neural network while the latent denoising neural network is conditioned on the text caption.

Clause 11. The method of clause 9 or clause 10, when dependent on clause 4, wherein performing a forward diffusion process starting from the latent representation and using the latent denoising neural network to generate the representation of the noise map comprises: performing a forward diffusion process starting from the latent representation and using the latent denoising neural network while the latent denoising neural network is conditioned on the text caption.

Clause 12. The method of any one of clauses 11 or 12, wherein the latent denoising neural network is conditioned on the text caption by processing an input comprising an embedding of the text caption, and wherein the method further comprises: processing the text caption using a text embedding neural network to generate the embedding of the text caption.

Clause 13. The method of any one of clauses 9-12, wherein generating the text caption comprises: processing the input image using an image captioning neural network to generate the text caption.

Clause 14. The method of any preceding clause, wherein the detector neural network is a convolutional neural network.

Clause 15. The method of any one of clauses 1-13, wherein the detector neural network is or a vision Transformer neural network.

Clause 16. The method of any preceding clause, wherein the diffusion model has been pre-trained prior to training the detector neural network and wherein the diffusion model is held fixed during the training of the detector neural network.

Clause 17. A system comprising: one or more computers; and one or more storage devices storing instructions that, when executed by the one or more computers, cause the one or more computers to perform the respective operations of the method of any one of clauses 1-16.

Clause 18. One or more computer-readable storage media storing instructions that when executed by one or more computers cause the one or more computers to perform the respective operations of the method of any one of clauses 1-16.

What is claimed is:

**Claims**

1. A method performed by one or more computers, the method comprising:

   obtaining an input image;
   generating, using a diffusion model and from the input image, a representation of a noise map;
   generating, using the diffusion model and from the representation of the noise map, a reconstruction of the input image; and
   processing a detector input that comprises the input image and the reconstruction of the input image using a detector neural network to generate a detector score that represents a likelihood that the input image is a synthetic image that has been generated by a generative model.

2. The method of claim 1, wherein the detector input further comprises the noise map.

3. The method of claim 1 or claim 2, wherein the input image is an image in pixel space, and wherein the diffusion model is a latent diffusion model that comprises:

   an image encoder configured to encode the input image in the pixel space into a latent representation of the image in a latent space;
   a latent denoising neural network that generates denoising outputs in the latent space; and
   an image decoder configured to decode the latent representation of the image from the latent space into the pixel space.

4. The method of claim 3, wherein generating, using a diffusion model and from the input image, a representation of a noise map comprises:

   processing the input image using the image encoder to generate the latent representation of the image in the latent space; and
   performing a forward diffusion process starting from the latent representation and using the latent denoising neural network to generate the representation of the noise map, wherein the representation of the noise map is in the latent space.

5. The method of claim 4, when dependent on claim 2, further comprising:
   processing the representation of the noise map using the image decoder to generate the noise map.

6. The method of any one of claims 3-5, wherein generating, using the diffusion model and from the representation of the noise map, the reconstruction of the input image comprises:

   performing a reverse diffusion process starting from the representation of the noise map and using the latent denoising neural network to generate a representation in the latent space of the reconstruction of the input image;

and

processing the representation of the reconstruction of the input image using the image decoder to generate the reconstruction of the input image, optionally wherein the reverse diffusion process is a DDIM sampling process, and optionally wherein the forward diffusion process is an inverted DDIM sampling process.

7. The method of any one of claims 3-6, wherein the latent denoising neural network is a text-conditional latent denoising neural network, and wherein the method further comprises generating, from the input image, a text caption.

8. The method of claim 7, when dependent on claim 6, wherein performing a reverse diffusion process starting from the representation of the noise map and using the latent denoising neural network to generate a representation in the latent space of the reconstruction of the input image comprises:
performing a reverse diffusion process starting from the representation of the noise map and using the latent denoising neural network while the latent denoising neural network is conditioned on the text caption.

9. The method of claim 7 or claim 8, when dependent on claim 4, wherein performing a forward diffusion process starting from the latent representation and using the latent denoising neural network to generate the representation of the noise map comprises:
performing a forward diffusion process starting from the latent representation and using the latent denoising neural network while the latent denoising neural network is conditioned on the text caption.

10. The method of any one of claims 8 or 9, wherein the latent denoising neural network is conditioned on the text caption by processing an input comprising an embedding of the text caption, and wherein the method further comprises:
processing the text caption using a text embedding neural network to generate the embedding of the text caption.

11. The method of any one of claims 7-10, wherein generating the text caption comprises:
processing the input image using an image captioning neural network to generate the text caption.

12. The method of any preceding claim, wherein the detector neural network is a convolutional neural network or a vision Transformer neural network.

13. The method of any preceding claim, wherein the diffusion model has been pre-trained prior to training the detector neural network and wherein the diffusion model is held fixed during the training of the detector neural network.

14. A system comprising:

one or more computers; and
one or more storage devices storing instructions that, when executed by the one or more computers, cause the one or more computers to perform the respective operations of the method of any one of claims 1-13.

15. One or more computer-readable storage media storing instructions that when executed by one or more computers cause the one or more computers to perform the respective operations of the method of any one of claims 1-13.

SYNTHETIC IMAGE DETECTION SYSTEM 100

DETECTOR SCORE 112

DETECTOR NEURAL NETWORK 140

102

120

130

INPUT IMAGE 102

Forward Diffusion

Reverse Diffusion

DIFFUSION MODEL 110

FIG. 1

200

OBTAIN INPUT IMAGE $\quad$ 202

GENERATE REPRESENTATION OF NOISE MAP $\quad$ 204

GENERATE RECONSTRUCTION FROM REPRESENTATION OF NOISE MAP $\quad$ 206

PROCESS DETECTOR INPUT THAT INCLUDES INPUT IMAGE AND RECONSTRUCTION USING DETECTOR NEURAL NETWORK TO GENERATE DETECTOR SCORE $\quad$ 208

FIG. 2A

220

```
┌─────────────────────────────────────────┐
│  IDENTIFY CURRENT REPRESENTATION AS OF    │  ⌐ 222
│         FORWARD DIFFUSION STEP            │
└─────────────────────────────────────────┘
                    │
                    ▼
┌─────────────────────────────────────────┐
│        GENERATE DENOISING OUTPUT          │  ⌐ 224
└─────────────────────────────────────────┘
                    │
                    ▼
┌─────────────────────────────────────────┐
│  GENERATE ESTIMATE OF CLEAN REPRESENTATION│  ⌐ 226
│         FROM DENOISING OUTPUT             │
└─────────────────────────────────────────┘
                    │
                    ▼
┌─────────────────────────────────────────┐
│   GENERATE UPDATED REPRESENTATION FOR     │  ⌐ 228
│         FORWARD DIFFUSION STEP            │
└─────────────────────────────────────────┘
```

FIG. 2B

250

```
┌─────────────────────────────────────────┐
│  IDENTIFY CURRENT REPRESENTATION AS OF   │─ 252
│         REVERSE DIFFUSION STEP           │
└─────────────────────────────────────────┘
                    │
                    ▼
┌─────────────────────────────────────────┐
│         GENERATE DENOISING OUTPUT         │─ 254
└─────────────────────────────────────────┘
                    │
                    ▼
┌─────────────────────────────────────────┐
│  GENERATE ESTIMATE OF CLEAN REPRESENTATION│─ 256
│          FROM DENOISING OUTPUT            │
└─────────────────────────────────────────┘
                    │
                    ▼
┌─────────────────────────────────────────┐
│   GENERATE UPDATED REPRESENTATION FOR     │─ 258
│          REVERSE DIFFUSION STEP           │
└─────────────────────────────────────────┘
```

FIG. 2C

300

302

360

370

140

380

input image $x$

decoded latent
noise map $D(\hat{z}_T)$

decoded image
reconstruction $D(\hat{z}_0)$

ResNet50

Real
or Fake

340

"a picture
of a fairy ..."

320

350

310

E

313

330

330

D

D

315

330

312

F$_\theta$

R$_\theta$

316

caption
embedding

latent image $z_0$

314

latent noise map $\hat{z}_T$

latent image
reconstruction $\hat{z}_0$

352

FIG. 3

**EUROPEAN SEARCH REPORT**

Application Number

EP 24 21 6445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IVANOVSKA MARIJA ET AL: "On the Vulnerability of Deepfake Detectors to Attacks Generated by Denoising Diffusion Models", 2024 IEEE/CVF WINTER CONFERENCE ON APPLICATIONS OF COMPUTER VISION WORKSHOPS (WACVW), 29 October 2023 (2023-10-29), pages 1051-1060, XP093260343, DOI: 10.1109/WACVW60836.2024.00115 ISBN: 979-8-3503-7028-7 * the whole document * * page 1 - page 8 * | 1-15 | INV. G06N3/045 G06N3/0464 G06N3/0475 |
| A | WANG YIYU ET AL: "End-to-End Transformer Based Model for Image Captioning", PROCEEDINGS OF THE AAAI CONFERENCE ON ARTIFICIAL INTELLIGENCE, vol. 36, no. 3, 29 March 2022 (2022-03-29), pages 2585-2594, XP093260507, ISSN: 2159-5399, DOI: 10.1609/aaai.v36i3.20160 * the whole document * | 1-15 | |
| A | ZEYANG SHA ET AL: "DE-FAKE: Detection and Attribution of Fake Images Generated by Text-to-Image Diffusion Models", ARXIV.ORG, CORNELL UNIVERSITY LIBRARY, 201 OLIN LIBRARY CORNELL UNIVERSITY ITHACA, NY 14853, 13 October 2022 (2022-10-13), XP091342868, * the whole document * | 1-15 | |

TECHNICAL FIELDS SEARCHED (IPC)

G06N

The present search report has been drawn up for all claims

| Place of search | Date of completion of the search | Examiner |
|---|---|---|
| The Hague | 18 March 2025 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document